# EUROPÄISCHE PATENTSCHRIFT

(11) **EP 1 985 185 B1**
(45) Veröffentlichungstag und Bekanntmachung des Hinweises auf die Patenterteilung: **15.09.2010**
(21) Anmeldenummer: 08007690.4
(22) Anmeldetag: 21.04.2008
(51) Int. Cl.: A22C 15/00

(54) **Stabmagazineinrichtung an einer Übergabevorrichtung für hängende Verpackungseinheiten**
Bar cartridge device in a transfer device for hanging packaging units
Dispositif de cartouche de tiges sur un dispositif de transmission pour unités d'emballage suspendues

(30) Priorität: 24.04.2007 CH 6762007
(43) Veröffentlichungstag der Anmeldung: 29.10.2008
(73) Patentinhaber: Tipper Tie Alpina GmbH, 9201 Gossau (CH)
(72) Erfinder: Lendenmann, Max, 9500 Wil (CH)
(74) Vertreter: Schalch, Rainer

(56) Entgegenhaltungen:
- DD-A3- 278 024
- US-A- 4 547 931
- US-A- 5 354 230
- US-A1- 2005 159 093

## Beschreibung

Die Erfindung betrifft eine Stabmagazineinrichtung an einer Übergabevorrichtung gemäss Oberbegriff des Anspruchs 1. Ferner betrifft die Erfindung eine Übergabevorrichtung mit einer solchen Stabmagazineinrichtung und weiter eine Anordnung aus einer solchen Übergabevorrichtung und einer Fangvorrichtung für Verpackungseinheiten mit Halteschlaufen.

Es ist bekannt, Würste, an die beim Setzen des einen Verschlussclips eine Halteschlaufe befestigt worden ist, hängend an einem stabförmigen Element von der Verschliessmaschine (Clipmaschine) wegzufördern, so z.B. aus DE-OS 3437830 und DE-PS 3806467. Die an dem Element, das auch als Schwert bezeichnet wird, hängenden Würste sollen für die spätere Weiterverarbeitung an so genannte Rauchstecken oder Rauchstangen bzw. einen Stab gehängt werden, mit denen die Würste dann zur Weiterverarbeitung, insbesondere zu einem Räuchervorgang, transportiert werden. EP-A 377 090 schlägt vor, die Würste vom Schwert auf das Obertrum einer Kette abzugeben. Der Kettenführungsrahmen ist um 180° schwenkbar, um die Würste an eine Rauchstange weiterzugeben. DE-B 10340632 zeigt das Fördern der Würste mittels einer Förderschnecke und von dieser die Abgabe an eine geneigt angeordnete und drehende Rauchstange, an der die Würste weitergefördert werden. Im CH-Patentgesuch 1336/06 vom 22. August 2006 der Tipper Tie Alpina AG ist es beschrieben, bei einer Übergabevorrichtung mit einer Stabwechseleinrichtung Rauchstäbe in einem ortsfesten Magazin direkt übereinander bzw. aufeinander anzuordnen, welche dann einzeln schwerkraftabhängig in die Stabwechseleinrichtung abgegeben werden. DD278024 offenbart ein angetriebenes Magazin mit einer Vielzahl von einzelnen, voneinander abgegrenzten Stabaufnahmen für jedes der beiden Enden eines Stabes. Bei verbogenen und/oder verdrehten Rauchstäben kann sich ein Verklemmen eines Rauchstabes in dem Magazin ergeben oder aneinander anliegende Rauchstäbe können sich verhaken. Ferner müssen Rauchstäbe mit derselben Querschnittsform verwendet werden, also z.B. ausschliesslich runde oder ausschliesslich viereckige oder ausschliesslich dreieckige Rauchstäbe, da sich ansonsten ebenfalls Störungen ergeben können, wenn Rauchstäbe mit unterschiedlichen Querschnittsformen aufeinander aufliegen.

Der Erfindung liegt die Aufgabe zu Grunde eine Stabmagazineinrichtung an einer Übergabevorrichtung zu schaffen, welche die genannten Nachteile nicht aufweist und insbesondere auch mit Stäben mit unterschiedlichen Querschnittsformen störungsfrei arbeitet.

Diese Aufgabe wird mit den Merkmalen des Anspruchs 1 gelöst.

Dadurch, dass die Stabmagazineinrichtung ein angetriebenes Magazin umfasst, welches eine Vielzahl von einzelnen, voneinander abgegrenzten Stabaufnahmen für die Enden der jeweiligen Stäbe bildet, die angetrieben entlang eines Förderweges von einer Beschickungsseite des Magazins zu einer Abgabeseite bewegbar sind, an welcher jeweils die Stabaufnahmen zur Abgabe eines Stabes an die Stabwechseleinrichtung positionierbar sind, sind die Stäbe im Magazin vereinzelt und können somit nicht verhaken und können in beliebiger Querschnittsform in den einzelnen Stabaufnahmen aufgenommen sein, so dass aufeinander folgend unterschiedliche Stabformen verwendet werden können.

Bevorzugt sind die Stabaufnahmen jeweils von an einer angetriebenen Förderkette oder an einem angetriebenen Förderriemen angeordneten Förderelementen und jeweils einer stillstehenden unteren Führung und jeweils einer stillstehenden seitlichen Führung gebildet, was eine besonders einfache Ausgestaltung der Stabaufnahmen mit wenigen angetriebenen Teilen ergibt. Die stillstehenden Teile können zur Anpassung der Stabaufnahme an die Stabdimension, insbesondere an die Stablänge, verwendet werden, so dass dabei keine beweglichen Teile geändert werden müssen. Bevorzugt werden die Stabaufnahmen entlang eines im Wesentlichen vertikalen Abschnittes des Förderweges jeweils von einer stillstehenden oberseitigen Führung begrenzt, so dass die Förderung auch vertikal erfolgen kann. Bevorzugt ist weiter der Antrieb für das Magazin mit der Steuerung der Übergabevorrichtung gekoppelt. Dies ermöglicht eine einfache Synchronisation des Magazins mit der Übergabevorrichtung. Insbesondere ist eine Erkennungseinrichtung für leere Stabaufnahmen vorgesehen, in welche beschickungsseitig also kein Stab eingelegt worden ist, wodurch die Steuerung das Magazin zur Weiterförderung leerer Stabaufnahmen antreiben kann, so dass zur Abgabe an die Stabwechseleinrichtung immer ein Stab bereit ist, wenn die Stabwechseleinrichtung zur Aufnahme eines weiteren leeren Stabes aus dem Magazin bereit ist.

Der Erfindung liegt weiter die Aufgabe zu Grunde, eine Übernahmevorrichtung mit störungsfreiem und möglichst stabformunabhängigen Wechsel der Stäbe zu schaffen.

Dies wird mit einer Übernahmevorrichtung erzielt, die mit der erfindungsgemässen Stabmagazineinrichtung versehen ist.

Bevorzugt ist diese Übergabevorrichtung so ausgestaltet, dass die Stabwechseleinrichtung einen Stabwechselschlitten aufweist, durch den mit einer Schlittenbewegung aus einer Ausgangsstellung in die eine Schlittenrichtung sowohl ein beladener Stab aus den Aufnahmemitteln wegführbar als auch ein zweiter Stab aus dem Magazin in die Aufnahmemittel einführbar ist. Die Ausbildung mit Schlitten ist, wie die erfindungsgemässe Magazineinrichtung, zur Aufnahme von gebogenen oder tordierten Stäben geeignet, ohne dass eine Funktionsstörung auftritt und kann ebenfalls unterschiedliche Stabformen aufnehmen.

Weiter ist es bevorzugt, dass die Übernahmevorrichtung ein Fördermittel zur Aufnahme einer Mehrzahl beladener Stäbe aufweist, welches von dem Schlitten jeweils mit einem beladenen Stab bedienbar ist. Bevorzugt ist, dass das Fördermittel für die beladenen Stäbe ein beidseits an diesen wirkender Kettenförderer oder ein Zahnriemenförderer mit Umlenkrollen ist, bei welchen die Ketten oder die Riemen von einer im Wesentlichen vertikalen Richtung in eine im Wesentlichen horizontale Richtung übergehen, wobei ein vom Stabwechselschlitten weggeführter Stab vom Fördermittel übernehmbar und horizontal in Richtung einer Ausgabestelle weiter förderbar ist. Dies ermöglicht eine besonders vorteilhafte Anordnung, bei welcher die Beschickungsseite der Stabmagazineinrichtung und die Ausgabestelle des Fördermittels für die beladenen Stäbe auf derselben Seite der Übergabevorrichtung liegen, was für die Bedienung und den Transport leerer und beladener Stäbe zur und von der Übergabevorrichtung vorteilhaft ist.

Die Anordnung aus der Übergabevorrichtung mit Stabmagazineinrichtung gemäss der Erfindung und der die Verpackungseinheiten bzw. Würste am Ausgang der Verschliessvorrichtung fangenden Fangvorrichtung ergibt ein einfaches automatisiertes Aufbringen der Verpackungseinheiten auf Rauchstecken und deren Bereitstellung für die Weiterverarbeitung der Würste.

Im Folgenden werden Ausführungsbeispiele der Erfindung anhand der Figuren näher erläutert. Dabei zeigt
Figur 1 eine Seitenansicht einer Übergabevorrichtung gemäss einem Ausführungsbeispiel der Erfindung;
Figur 2 eine Frontalansicht der Übergabevorrichtung von Figur 1;
Figur 3 eine Detailansicht der Übergabevorrichtung von Figur 2 mit dem Schlitten;
Figur 4 eine schaubildliche Ansicht einer Stabmagazineinrichtung;
Figur 5 eine Ansicht auf die Innenseite der Stabmagazineinrichtung von Figur 4;
Figur 6 eine Ansicht von oben auf ein erstes stabförmiges Element (Schwert), von welchem die hängenden Verpackungseinheiten mittels der Übergabevorrichtung abgegriffen werden;
Figur 7 eine Detailansicht der Greifmittel und des Auslösemittels; und
Figur 8 eine Seitenansicht einer Verschliessvorrichtung und eines Teils der Fangvorrichtung einer Anordnung aus diesen Vorrichtungen und einer Übergabevorrichtung.

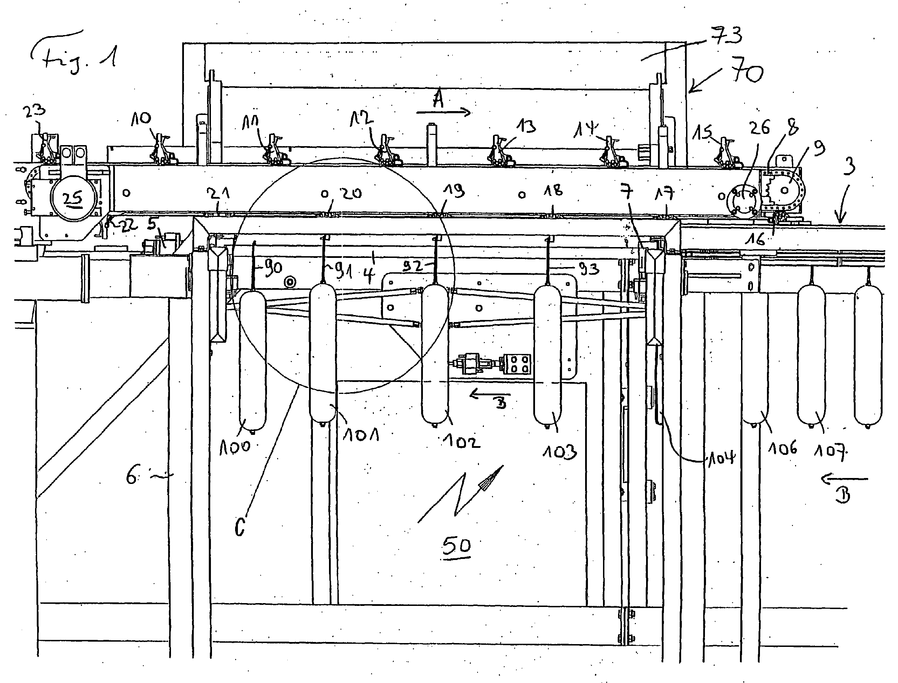

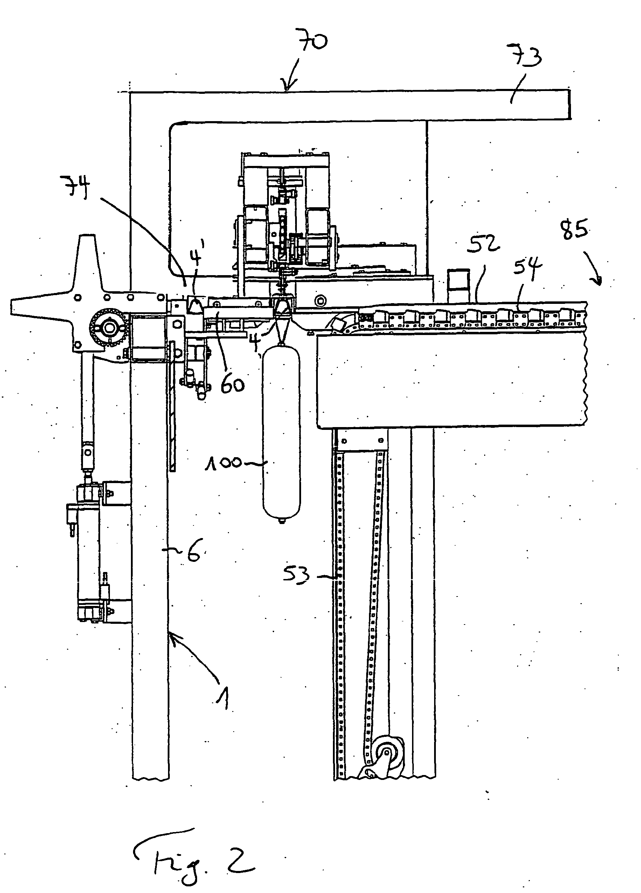

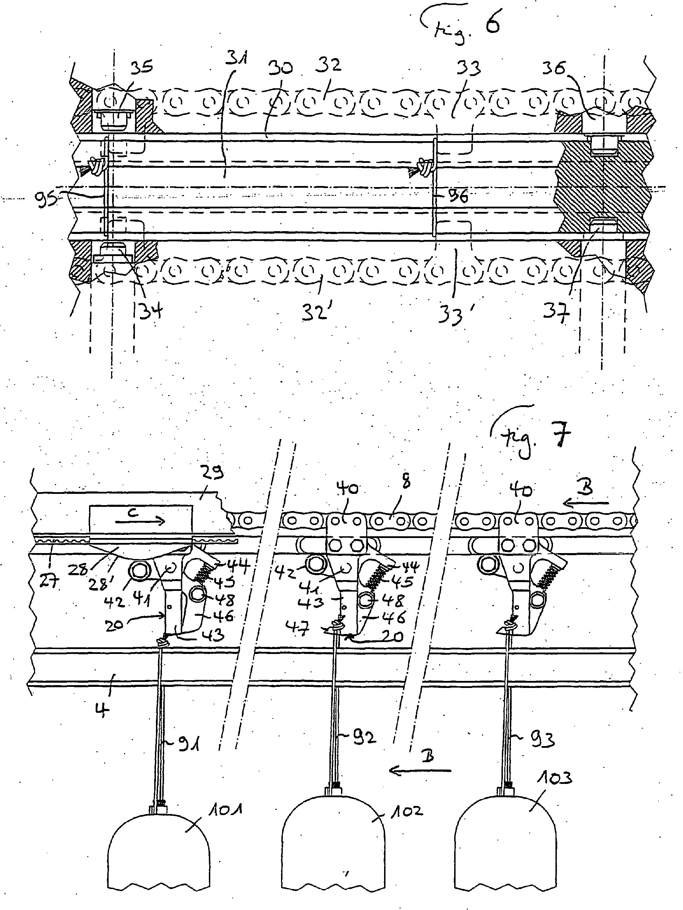

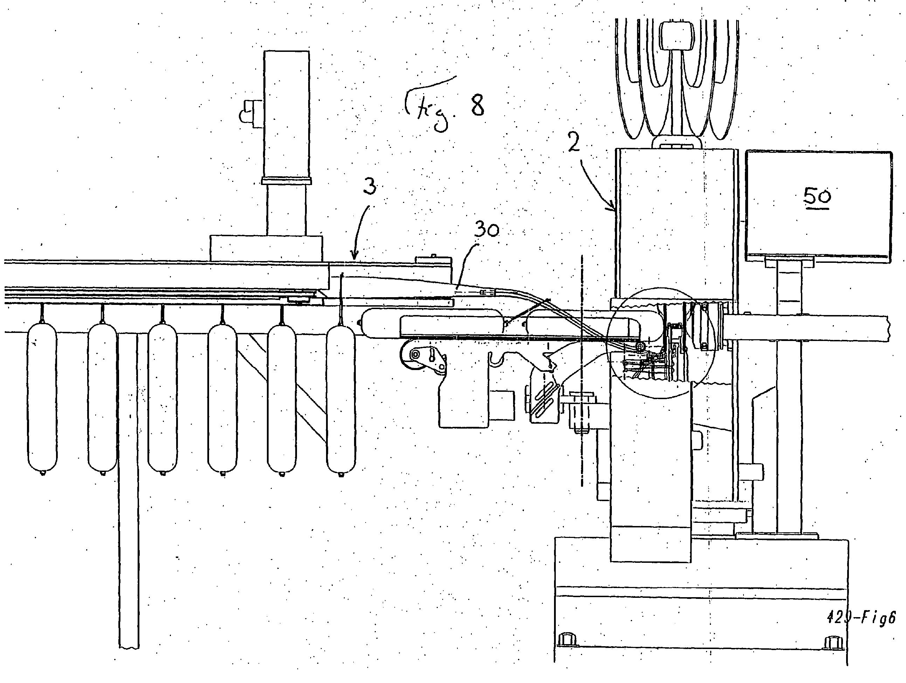

Figur 1 zeigt eine Übergabevorrichtung 1 in Seitenansicht. Dieser werden an Halteschlaufen hängende Verpackungseinheiten von einer Fangvorrichtung 3 her zugeführt, welche diese Verpackungseinheiten von einer Verschliessvorrichtung übernommen hat, welche in Figur 8 dargestellt ist und noch erläutert wird. Die Fangvorrichtung 3 fördert die Verpackungseinheiten, welche in dem gezeigten Beispiel Würste sind, welche aber auch andere Gegenstände sein können, entlang eines zweiten stabförmigen Elementes 30, das auch als Schwert bezeichnet wird, und welches ebenfalls in Figur 8 in Seitenansicht ersichtlich ist sowie in Figur 6 in Draufsicht. Die Übergabevorrichtung 1 erfasst, und insbesondere greift, die Verpackungseinheiten im Endbereich des Schwertes, in welchem dieses an die Übergabevorrichtung 1 anschliesst. Die Übergabevorrichtung 1 ist zur lösbaren Halterung eines ersten stabförmigen Elementes bzw. Stabes 4, welches in der Regel ein Rauchstecken ist, wenn es sich bei den Verpackungseinheiten um Würste handelt, ausgestaltet. Die Übergabevorrichtung übergibt die am Schwert 30 hängenden Verpackungseinheiten an den Stab 4. Dieser wird in der Übergabevorrichtung 1 so gehalten, dass er im Wesentlichen koaxial mit dem Schwert 30 der Fangvorrichtung angeordnet und gehalten werden kann. Bevorzugt gibt ein Fördermittel 52 (Figur 2) die beladenen Stäbe senkrecht zur Zeichnungsebene nach vorne ab. In Figur 1 ist die Stabmagazineinrichtung mit einem Kasten 70 angedeutet. Deren Beschickungsseite für die Beschickung des Magazins mit Stäben 4 ist mit 73 angedeutet. Bevorzugt erfolgt die Beschickung im Wesentlichen so, dass in der Figur die Beschickungsrichtung im Wesentlichen senkrecht zur Zeichnungsebene nach hinten erfolgt. Dadurch kann die Beschickung mit leeren Stäben und die Entnahme beladener Stäbe von der selben Seite der Übernahmevorrichtung erfolgen. Bei der Beschickung werden die leeren Stäbe vorzugsweise mit ihrer Längsachse parallel liegend zu den auf dem Fördermittel geförderten beladenen Stäben in das Magazin eingegeben. Diese Beschickung erfolgt von Hand.

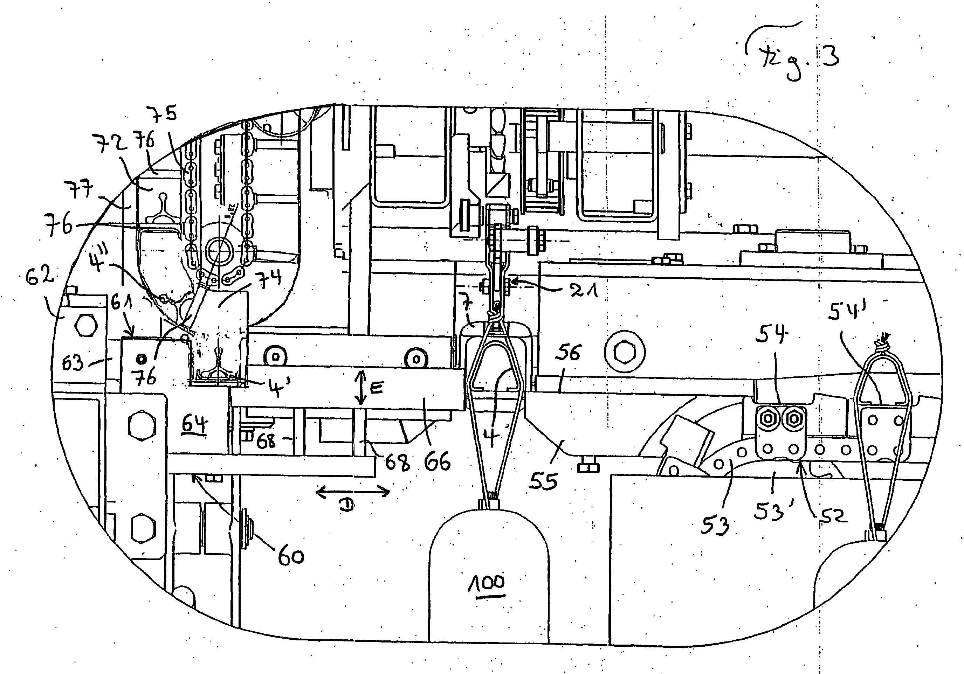

Figur 2 zeigt eine stirnseitige Ansicht der bereits beschriebenen Übergabevorrichtung 1. Ersichtlich ist wiederum der Rauchstecken bzw. Stab 4, der in der Übergabevorrichtung in Aufnahmemitteln lösbar gehalten ist. Zu dieser Aufnahme bzw. Halterung des Stabes 4 in der Stellung, in der er mit den Verpackungseinheiten beladen wird, kann ein erstes stirnseitiges Halteteil 7 und ein zweites stirnseitiges Halteteil vorgesehen sein (Figur 1) wobei mindestens eines der Halteteile, in Figur 1 das Halteteil 5, angetrieben ist, z.B. pneumatisch angetrieben ist, um eine lösbare Halterung des Rauchsteckens zu bewirken. Sobald ein Rauchstecken 4 beladen ist, so wird er weggeführt und durch einen leeren Rauchstecken ersetzt, was nachfolgend anhand Figur 3 näher beschrieben wird. Der neu in die Beladestellung gebrachte Stab 4 wird dann wiederum durch die Übergabevorrichtung 1 mit Würsten beladen. In Figur 2 ist das oben erwähnte Fördermittel als Beispiel als Fördermittel 52 dargestellt, welches über eine Kette 53 mit einer Umlenkung 53' (Figur 3) von einem nicht auf der Zeichnung ersichtlichen Antrieb angetrieben ist, die die einzelnen Stäbe 4 von der Übergabevorrichtung wegführt und eine Vielzahl von beladenen Stäben 4 zur Weiterverarbeitung der daran gehaltenen Würste bereitstellt. Eine weitere Kette 53 ist auch auf der anderen Seite der Einrichtung für die anderen Enden der Stäbe vorgesehen. Die beiden Ketten werden über eine (nicht gezeigte) gemeinsame Antriebswelle synchronisiert, die im gezeigten Beispiel unterhalb der am Stab hängenden Würste liegt, aber im Falle einer Kettenführung der Kette 53 vertikal nach oben anstelle der gezeigten Kettenführung nach unten oberhalb der Rauchstäbe liegen würde. Mit 51 ist ein Magazin für die Stäbe 4 bezeichnet, aus welchem ein leerer Stab 4 bzw. Rauchstecken wieder in die Haltestellung in der Übergabevorrichtung 1 gebracht werden kann. Die Übergabevorrichtung ist vorzugsweise als selbst stehende Einheit mit einem Gestell 6 ausgerüstet, mittels welchem sie am Ende der Fangvorrichtung 3 angeordnet werden kann. An der Übergabevorrichtung ist eine erfindungsgemässe Stabmagazineinrichtung 70 angedeutet, die nachfolgend genauer erklärt wird. In Figur 2 ist dabei ebenfalls die bevorzugte Ausführungsform ersichtlich, bei welcher die Beschickungsseite 73 der Stabmagazineinrichtung auf der selben Seite der Vorrichtung 1 liegt, wie die mit 85 angedeutete Ausgabestelle des Fördermittels 52. Die Ausgabestelle der Stabmagazineinrichtung 70 ist mit 74 angedeutet. An dieser Stelle ist jeweils eine Stabaufnahme so positioniert, dass der darin angeordnete Stab in die Stabwechseleinrichtung 60 gelangen kann, wenn diese zur Aufnahme des nächsten Stabes bereit ist.

Die an der Übergabevorrichtung angeordnete Stabwechseleinrichtung 60 weist z.B. für die beiden Enden des Stabes 4 bzw. bei beiden Aufnahmen 5,7 für den Stab je einen Schlitten 61 auf, der eine translatorische Hin- und Herbewegung in Richtung des Pfeiles D (Figur 3) ausführen kann. Natürlich könnte entlang des Stabes, z.B. in dessen Mitte, ein weiterer Schlitten angeordnet sein. In der Figur 3 ist gemäss der Art der Frontalansicht nur der Schlitten am vorderen Ende des Stabes bzw. im Bereich der Aufnahme 5 dargestellt, welche selber in der Figur nicht dargestellt ist, so dass der Blick auf das freie Ende des Stabes 4 ersichtlich ist, der in der Aufnahme 5 gehalten wäre. Die weitere Beschreibung erfolgt nur anhand des einen Schlittens der Stabwechseleinrichtung, doch ist der zweite Schlitten der Einrichtung am anderen Stabende entsprechend ausgeführt, bzw. wäre ein ggf. vorgesehener dritter oder gar vierter Schlitten entsprechend ausgeführt. Ein feststehender Teil 62 der Stabwechseleinrichtung enthält den Linearantrieb für die Schlitten, der z.B. von einer pneumatischen Kolben- Zylinderanordnung gemeinsam für beide Schlitten oder jeweils für jeden Schlitten einzeln gebildet sein kann. Auch andere Antriebsvarianten sind möglich und dem Fachmann zur Ausführung einer hin- und herlaufenden Schlittenbewegung geläufig. Über das Glied 63 erfolgt der Antrieb eines ersten Schlittenteiles 64, das über einen weiteren Schlittenteil 67 mit dem Wegführteil 66 des Schlittens in Verbindung ist. Der Teil 64 bildet eine Aufnahme 65 für den nächsten in Beladestellung zu bringenden Stab 4' aus. Das Wegführteil 66 des Schlittens reicht bis zum Stab 4, der sich in den Aufnahmemitteln 5, 7 der Übergabevorrichtung und somit in Beladestellung befindet. Das Wegführteil 66 kann den Stab auch teilweise untergreifen, um ihn beim Wegführen abzustützen. In der dargestellten Beladestellung für den Stab wird der Stab 4 von der Übergabevorrichtung mit den Verpackungseinheiten, insbesondere Würsten, beladen, was in den Figuren 2 und 3 mit der Wurst 100 dargestellt ist und nachfolgend noch genauer erläutert wird.

Ist der Stab 4 vollständig beladen, so wird der Schlitten 61 in Figur 3 nach rechts gefahren. Ebenso werden die Aufnahmemittel 5,7 für den Stab 4 gelöst, so dass dieser vom Schlitten 61, bzw. vom Schlittenteil 66 nach rechts weggeführt werden kann. Eine Führung 55 mit einer Gleitfläche 56 (natürlich jeweils wieder für beide Endbereiche des Stabes vorgesehen) lässt den Stab 4 gestossen vom Schlittenteil 66 über die Gleitfläche 56 zum Fördermittel 52 gelangen, wo der Stab 4 in diejenige der Aufnahmetaschen(Tasche 54) aufgenommen wird, die vorgängig nach oben bewegt worden ist und dort auf den Stab 4 wartet. Die vorgängig von dem Fördermittel nach oben bewegte Aufnahmetasche 54' ist bereits vom vorgängig beladenen und vom Schlitten weggeführten Stab besetzt, weitere Taschen, die aber in der Figur nicht dargestellt sind, sind mit weiteren vorgängigen Stäben besetzt. So wird das Fördermittel nach und nach entlang seiner ganzen horizontalen Ausdehnung mit beladenen Stäben gefüllt. Bevorzugt ist das erläuterte Vorgehen, bei dem die Aufnahmetasche stillsteht und auf den Stab 4 wartet. Nachfolgend wird dann jeweils die Kette 53 angetrieben und die nächste Tasche 54 in Wartestellung gebracht. Es könnte aber auch so vorgegangen werden, dass die jeweils mit dem Stab zu beladende Tasche vom Antrieb der Kette 53 genau dann in Beladeposition gebracht wird, wenn der Stab vom Schlitten angeliefert wird, was allerdings eine feinere Synchronisation zwischen dem Schlitten und dem Antrieb der Kette 53 benötigt.

Ist ein Stab 4 auf die beschriebene Weise von der Beladestellung weggeführt worden, so gelangt andererseits mit der gleichen Schlittenbewegung der nächste leere Stab 4' in der Aufnahme 65 des Schlittens in die Beladeposition der Übergabevorrichtung und kann dort von den Aufnahmemitteln 5,7 derselben fixiert werden. Für die Rückbewegung des Schlittens in der Figur nach links wird das Schlittenteil 66 gemäss Pfeil E entlang der Führungen 68 abgesenkt, damit der Schlitten unter dem nun in Beladepositon befindlichen Stab 4' zurück in die Ausgangsstellung fahren kann, in der der Schlittenteil wieder in die dargestellte hochgefahrene Stellung bewegt wird. Die Bewegung nach unten und nach oben des Schlittenteils 66 entlang den Führungen 68 wird z.B. ebenfalls pneumatisch oder mittels Elektromagneten bewirkt, was hier nicht weiter erläutert wird, da dem Fachmann ohne Weiteres ersichtlich ist, wie er eine entsprechende Bewegung bewirken kann.

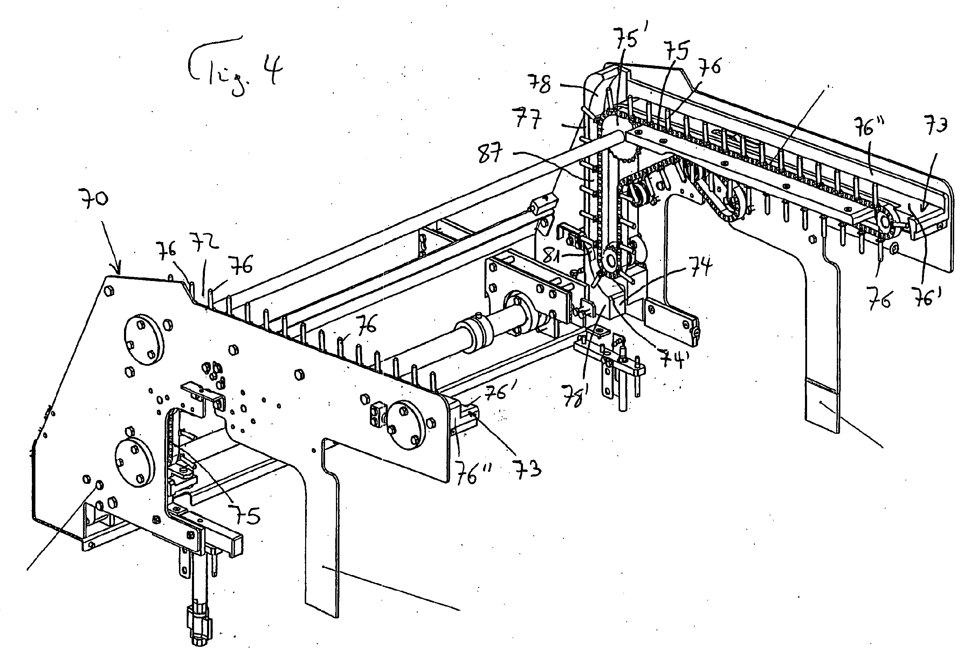

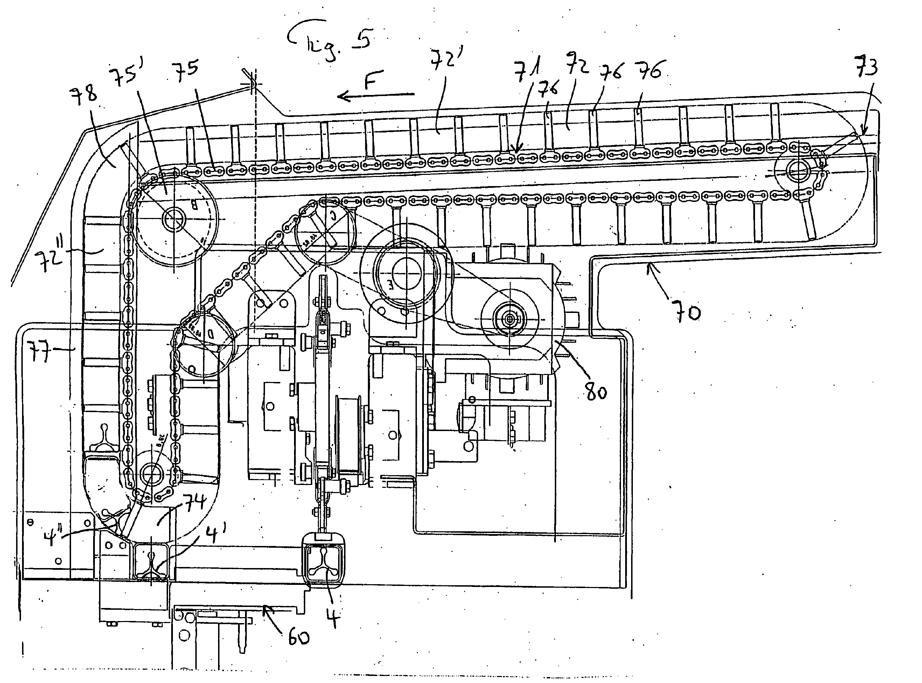

Der Schlitten 61 ist somit wieder in der dargestellten Position (Ausgangsstellung) und der Stab 4' ist nun in der Beladeposition und wird beladen. Die Aufnahme 65 am Schlitten für den nächsten Stab ist aber noch leer. Bevorzugt erfolgt die Einbringung des nächsten Stabes in die Aufnahme 65 durch ein schwerkraftbewirktes Fallenlassen des nächsten Stabes 4" aus der Stabmagazineinrichtung 70. Diese ist in Figur 3 nur teilweise gezeigt und in den Figuren 4 und 5 genauer dargestellt. In der schaubildlichen Ansicht von Figur 4 auf die Einrichtung 70 (ohne einen Teil der Antriebsmittel) und in der Seitenansicht von Figur 5 auf eine der Seiten der Einrichtung 70 ist insbesondere das angetrieben bewegliche Magazin der Stabmagazineinrichtung 70 gut ersichtlich, welches in diesem Beispiel zwei Kettenfördermittel mit den Ketten 75 und den daran angeordneten Fördernocken 76 umfasst, welche beidseitig so angeordnet sind, dass die Stäbe 4 jeweils mit ihren Enden in einem der Fördermittel liegen. Die Fördernocken fördern dabei die Stäbe, wenn die Kette 75 angetrieben wird, entlang des Förderweges F, wobei die Förderung im Betrieb von der Beschickungsseite 73 zur Auslassseite 74 hin erfolgt. Im gezeigten Beispiel weist das Magazin ferner die stillstehenden Führungen 76' auf, auf welchen die Stabenden aufliegen und die seitlichen stillstehenden Führungen 76", welche das Magazin in Richtung der Stablängsachse begrenzen. Diese seitlichen Führungen 76'' sind vorzugsweise an die Länge der üblicherweise vom Betreiber der Übernahmevorrichtung verwendeten Stäbe 4 angepasst und die Anpassung kann z.B. dadurch erfolgen, dass auf den beiden Seiten des Magazins verschieden breite seitliche Führungen 76" verwendet werden, wie dies in der Figur 4 ersichtlich ist, bei der die linke seitliche Führung 76" breiter ist, als die in der Figur rechte seitliche Führung 76'. Die im Beschickungsbereich auf die Führungen 76' aufgelegten Stäbe werden vereinzelt in den durch die Fördernocken 76 voneinander getrennten, angetrieben bewegten Stabaufnahmen 72, 72', 72" usw. gefördert. Dies erfolgt im gezeigten Beispiel zunächst horizontal und danach mit Hilfe einer weiteren Führung 77 vertikal. Für den vertikalen Verlauf werden die Ketten 75 des Kettenfördermittels über Umlenkkettenräder 75' umgelenkt und die Führung 77 weist einen Einlauf 78 auf, ab welchem diese Führung mit den Führungen 76' und 76" einen vertikal verlaufenden Kanal 87 bildet, in welchem die Stäbe immer noch von den Nocken 76 gefördert und voneinander separiert werden. Am unteren Ende des Kanals 87 öffnet sich dieser in die Ausgabezone 74 des Fördermittels, in welcher jeweils ein Stab in den Schlitten der Stabwechseleinrichtung fällt, wenn der vorlaufende Fördernocken 76 den Stab freigibt, sobald dieser Fördernocken die Kante 74' der in der Ausgabezone 74 endenden Führung 77 genügend weit passiert hat, dass der Stab schwerkraftabhängig in die Aufnahme des Schlittens fallen kann, allenfalls noch gestossen vom nachfolgenden Nocken 76. Dies ist in Figur 5 ersichtlich, in welcher der Stab 4' bereits im Schlitten angeordnet ist, während der Stab 4 mit Würsten beladen wird (hierbei sind Stäbe mit dreieckiger Querschnittsform gezeigt, während vorgängig z.T. Stäbe mit anderer Querschnittform gezeigt waren; die erfindungsgemässe Ausgestaltung erlaubt aber die Verwendung von unterschiedlichen Stabformen). Der auf den Stab 4' folgende Stab 4" ist noch im Magazin, dessen, vorzugsweise schrittweiser, Antrieb nun gestoppt ist. Hat der Schlitten 61 dann den beladenen Stab 4 gegen den leeren Stab 4' ausgewechselt und ist wieder zurück gefahren, so dass die nun leere Aufnahme 65 des Schlittens wieder in der Position von Figur 5 ist (aber eben leer), so wird das Magazin angetrieben, um den nachfolgenden Stab 4" in die Aufnahme 65 zu entlassen, was geschieht, wenn der vorlaufende Nocken die Kante 74 genügend weit passiert hat, dass der Stab 4" in die Schlittenaufnahme 65 fallen kann. Das Magazin wird danach wieder gestoppt, zum Beispiel in der in Figur 5 gezeigten Stellung, so dass der nächste Stab für die Übergabe an den Schlitten bereit ist aber vom gestoppten Magazin zurück gehalten wird, bis der Schlitten wieder leer in der Aufnahmeposition ist. Dann wiederholt sich der geschilderte Vorgang mit dem Weiterantrieb des Magazins um die nötige Schrittweite. Bevorzugt ist eine Erkennung für leere Stabaufnahmen 72 des angetriebenen Magazins vorgesehen. In Figur 4 ist dazu als Beispiel eine mechanische Erkennung mit einer Schaltfahne 81 gezeigt, welche in jede der einander folgenden Stabaufnahmen eingreift und dadurch mechanisch abtasten kann, ob darin ein Stab enthalten ist oder nicht. Wenn nicht, so wird das von einem Schalter, der die Schaltfahne trägt oder mit ihr verbunden ist, als elektrisches Signal an die Steuerung für den Antrieb des Magazins gesandt, so dass dieser die leere Stabaufnahme 72 oder leere Stabaufnahmen an der Schlittenaufnahme vorbei fördert, bis wieder eine Stabaufnahme mit einem darin enthaltenen Stab bis zum Schlitten gefördert worden ist und dort auf die Rückkehr des Schlittens mit leerer Schlittenaufnahme 65 wartet. Dadurch führen bei der Beschickung an der Beschickungsseite 73 leer gebliebene Stabaufnahmen nicht zu einer Verzögerung oder Fehlfunktion bei der Stabübergabe von dem angetriebenen Stabmagazin der Stabmagazineinrichtung 70 zum Schlitten der Stabwechseleinrichtung 60. Anstelle einer mechanischen Abtastung kann auch eine berührungslose, z.B. optische, Erkennung leerer Stabaufnahmen vorgesehen sein.

Für den Antrieb des angetriebenen Magazins kann z.B. ein Servomotorantrieb oder Schrittmotorantrieb mit einem Motor 80 (Figur 5) vorgesehen sein, welcher auf für den Fachmann bekannte Weise die Ketten 75 antreibt, z.B. über weitere zwischengeschaltete Ketten oder Zahnräder. Natürlich können anstelle der Ketten 75 auch Zahnriemen oder andere Antriebsmittel für die Fördernocken treten. Der Antrieb der Stabmagazineinrichtung wird vorzugsweise durch dieselbe Steuerung 50 gesteuert, die auch die anderen Antriebe der Übernahmevorrichtung und der Fangvorrichtung 3 steuern, welche zusammen eine Anordnung bilden.

Nachfolgend wird eine bevorzugte Ausführungsform der Übergabevorrichtung geschildert. Die erfindungsgemässe Stabmagazineinrichtung, und ggf. die Stabwechseleinrichtung in der Ausführung mit Schlitten, ist bzw. sind aber bei allen Arten von Übergabevorrichtungen, die den Stab endseitig halten, anwendbar.

Im dargestellten Beispiel von Figur 1 sind die Erfassungsmittel der Übergabevorrichtung 1 zum Greifen der Halteschlaufen am zweiten stabförmigen Element bzw. am Schwert 30 als Haken 10-23 ausgeführt, welche an einem umlaufenden Fördermittel befestigt sind, welches im gezeigten Beispiel eine Kette 8 ist, die am einen Ende der Übergabevorrichtung, welches der Fangvorrichtung 3 benachbart ist, um ein Kettenrad 9 umgelenkt wird. Am anderen Ende der Übergabevorrichtung läuft die Kette ebenfalls um ein Kettenrad, welches von einem steuerbaren Antrieb 25 angetrieben wird. Die nur schematisch dargestellte Steuerung 50 ist entsprechend mit Steuerleitungen mit dem Antrieb 25 verbunden. Dieser Antrieb ist z.B. ein elektromotorischer Antrieb mit einem Servomotor. Die Greifmittel 10-23 laufen mit der Kette 8 in Richtung des Pfeiles A und werden im Bereich des Endes der Fangvorrichtung 3 umgelenkt. Bei der gezeigten Ausführungsform erfolgt das Greifen der Halteschlaufen der Verpackungseinheiten derart, dass die hakenförmigen Greifmittel nach der Umlenkung in eine oberseitige Nut 31 des Schwertes 30 eintauchen, über welche Nut sich die Halteschlaufe spannt.

In Figur 6 ist eine Draufsicht auf einen Teil des Schwertes 30 mit der Nut 31 sowie mit Halteschlaufen 96 und 95 gezeigt, welche die Nut 31 überspannen. Mit dem Eintauchen eines der hakenförmigen Greifmittel in die Nut 31 und einer schnelleren Bewegung des Greifmittels als es der Fördergeschwindigkeit der Halteschlaufen bzw. Verpackungseinheiten entlang des Schwertes entspricht, kann somit jeweils eine Halteschlaufe von dem Haken gegriffen und dadurch durch das Greifmittel übernommen werden. Figur 6 zeigt die Förderung der Halteschlaufen 95 und 96 am Schwert mittels Förderlaschen 33, 33' welche in seitliche Nuten des Schwertes 30 eingreifen und damit jeweils die Halteschlaufe mit der Geschwindigkeit der Ketten 32 und 32' fördern, an welchen die Förderlaschen 33 bzw. 33' befestigt sind. Damit die Halteschlaufen über das Schwert gefördert werden können, ist dieses fliegend mittels mehreren Paaren von Haltebolzen gehalten, welche jeweils beim Passieren einer Halteschlaufe vom Schwert zurückgezogen werden, wobei in dieser Zeit das Halten des Schwertes durch andere Haltebolzenpaare übernommen wird. Dies ist grundsätzlich bekannt. In der Figur 6 sind dazu als Beispiel lediglich die Haltebolzenpaare 34, 35 sowie 36, 37 dargestellt. Sobald ein hakenförmiges Greifmittel die Halteschlaufe gegriffen hat, wird sie durch das etwas schneller als die Ketten 32, 32' der Fangvorrichtung 3 laufende Greifmittel bis zum Ende des Schwertes weitergefördert und ab dort nur noch am Haken hängend weitergefördert. In Figur 1 ist ersichtlich, wie am Ende der Fangvorrichtung 3 einzelne Würste 107, 106 und 105 in Pfeilrichtung B gefördert werden, wobei die Wurst 107 mit ihrer Halteschlaufe 96 am Schwert hängt und noch durch die Förderlaschen 33, 33' gefördert wird. Die Wurst 106 mit ihrer in der Figur nicht ersichtlichen Halteschlaufe wird nächstens durch das bereits umgelenkte Greifmittel 16 ergriffen und entsprechend durch dieses bis zum Ende des Schwertes gefördert. Die Ketten 32, 32' der Fangvorrichtung sind vorher umgelenkt worden und haben die Förderung entlang des Schwertes 30 an dieser Stelle schon beendet. Ganz am Ende des Schwertes befindlich ist ein vorher umgelenktes Greifmittel 17, an welchem die nur teilweise ersichtliche Wurst 104 hängt. Die Greifmittel 18, 19 und 20, an welchen jeweils die Würste 103, 102 und 101 mittels der Halteschlaufen 93, 92 und 91 gehalten sind fördern diese in Richtung des Pfeiles B über den Rauchstecken 4. Da der Rauchstecken im wesentlichen koaxial mit dem Schwert angeordnet ist, umfassen die Halteschlaufen, welche vorgängig das Schwert umfasst haben, nun den Rauchstecken 4. Die vorderste Verpackungseinheit 100 mit der Halteschlaufe 90 ist bereits vom Greifmittel 21 losgelassen worden, so dass die Verpackungseinheit nun hängend am Rauchstecken und von diesem gehalten angeordnet und positioniert ist. Das gezeigte Beispiel mit dem kontinuierlich umlaufenden Fördermittel mit den daran angeordneten Greifmitteln ist als bevorzugtes Beispiel zu verstehen. Es können auch anders ausgestaltete und bewegte Erfassungsmittel vorgesehen sein, z.B. solche, welche bis zum Ende des Schwertes durch die Fangvorrichtung geförderte Verpackungseinheiten beim Abfallen derselben vom Schwert in ihren Halteschlaufen auffangen, z.B. mit Haken oder Stiften, und diese wiederum durch gemeinsame synchrone Förderung oder auch durch einzelne, asynchrone Förderung entlang des Rauchsteckens fördern.

Figur 7 zeigt nun eine Detailansicht der Greifmittel, die als Haken ausgebildet sind und deren Auslösung durch ein Auslösemittel zum Loslassen der jeweiligen Halteschlaufe. In Figur 7 ist wieder die Kette 8 ersichtlich, an welcher die Greifmittel 18, 19 und 20 durch Befestigungsmittel 40 fest angeordnet sind. Das einzelne Greifmittel ist in diesem bevorzugten Beispiel als Haken ausgeführt, welcher ein schwenkbares Hakenteil aufweist, das aus seiner Greifstellung zum Greifen der Halteschlaufen in eine Loslassstellung bewegbar ist. Der einzelne Haken weist in diesem Beispiel ein feststehendes Hakenteil 43 auf, das an der Lasche 40 befestigt ist. Feststehend ist ebenfalls das Abstützteil 44 für ein Federmittel 45, im gezeigten Beispiel eine Druckfeder. Ein schwenkbares Hakenteil 46 mit dem Hakenende 47 ist um eine Achse 41 am feststehenden Hakenteil 43 schwenkbar befestigt. Am schwenkbaren Hakenteil 46 ist weiter ein Löseteil 42 angeordnet. Dies kann z.B. ein feststehendes Element oder eine drehbare Rolle sein. Die Greifmittel 18 und 19 sind in Figur 7 in Greifstellung gezeigt. In dieser Stellung sind sie vorgängig in die Nut 32 des Schwertes 30 eingetaucht und haben die jeweilige Halteschlaufe 93 bzw. 92 der Wurst 103 bzw. 102 an dem die Nut 30 überspannenden Halteschlaufenteil gegriffen. Die Würste 102 und 103 hängen somit an den Greifmitteln 18 und 19 während gleichzeitig der Rauchstecken 4 die Halteschlaufe durchsetzt. Durch das Fördermittel bzw. die Kette 8 werden die Würste in Richtung des Pfeiles B gefördert. Anhand des Greifmittels 20 wird nun das Loslassen einer Verpackungseinheit gezeigt. Dazu wird das bewegliche, schwenkbare Hakenteil 46 entgegen der Kraft der Druckfeder 45 geschwenkt, so dass die Hakenspitze 47 sich hinter das feststehende Hakenteil zurückzieht und die Halteschlaufe von der Hakenspitze 47 abgestreift wird. Diese Lösung mit der Abstreifung ist ein bevorzugtes Beispiel. Der Haken könnte auch soweit geschwenkt werden, dass die Halteschlaufe lediglich durch die Schrägstellung der Hakenspitze von selber von dieser abrutscht und somit auf den Rauchstecken 4 gelangt. Das Schwenken des beweglichen Hakenteils 46 wird durch ein Auslösemittel bewirkt. Dieses Auslösemittel ist im gezeigten Beispiel ein Auslöseblock 28 mit einer Steuerkurve 28', durch welche das jeweilige Löseteil 42 beaufschlagbar ist, um die Schwenkbewegung des beweglichen Hakenteils 46 um die Schwenkachse 41 bewirken. Der Auslöseblock 28 ist dabei z.B. in einer Schiene 29 geführt und wird durch ein Fördermittel 27 in Richtung des Pfeiles C angetrieben. Das Auslösemittel läuft somit dem Fördermittel der Greifmittel entgegengesetzt und trifft damit auf seinem Weg von der dem Schwert abgewandten Ende des Rauchsteckens zu dem schwertseitigen Ende des Rauchsteckens nach und nach auf alle durch die Greifmittel geförderten Verpackungseinheiten. Durch die Steuerung des angetrieben bewegten Auslösemittels kann somit bestimmt werden, an welcher Position entlang des Rauchsteckens die Greifmittel die Verpackungseinheiten loslassen. Zum gesteuerten Antrieb des Auslösemittels kann ein Motor 26 (Figur 1) vorgesehen sein, welcher den Zahnriemen 27 antreibt. Der Motor 26 ist ebenfalls mit der Steuerung 50 verbunden, welche somit bestimmen kann, an welcher Position eine einzelne Verpackungseinheit abgesetzt bzw. losgelassen wird. Auch das Auslösemittel kann natürlich anders ausgeführt werden, als in dem bevorzugten Beispiel gezeigt. So könnten eine Vielzahl von fest positionierten Auslösemitteln vorgesehen sein, welche einzeln ansteuerbar sind, um auf ein Löseteil der Greifmittel einzuwirken. Solche einzelnen Auslösemittel könnten z.B. elektromagnetisch oder pneumatisch betätigt werden. Auch auf diese Weise kann das Loslassen und Positionieren bewirkt werden, wobei in diesem Fall die Position nicht stufenlos durch Verfahren des Auslöseblockes gewählt werden kann, sondern fix durch die Anordnung der einzelnen Auslösemittel gegeben ist.

Die Steuerung 50 ist vorzugsweise ebenfalls für die Steuerung der Stabwechseleinrichtung 60 ausgebildet und für die Steuerung der Mittel 58 und 59 im Magazin.

Auf die geschilderte Weise wird eine Anordnung aus Übergabevorrichtung 1 mit Stabwechseleinrichtung 60, Fangvorrichtung 3 sowie einer Verschliessmaschine 2 für die wurstförmigen Verpackungen gebildet, wie dies in den Figuren 1 und 8 dargestellt ist. Die Verschliessvorrichtung 2 ist dabei eine bekannte Verschliessvorrichtung, welche Verschlussclips an den wurstförmigen Verpackungseinheiten setzt. Dabei wird auch die Halteschlaufe an der jeweiligen Verpackungseinheit befestigt. Die Fangvorrichtung 3 mit dem Schwert 30 übernimmt die einzelnen Halteschlaufen und damit die Verpackungseinheiten und transportiert diese entlang des Schwertes 30 auf die beschriebene Weise oder auf eine andere Art. Danach schliesst sich die im Detail beschriebene Übergabevorrichtung 1 an. Vorzugsweise ist eine Steuerung 50 vorgesehen, die z.B. die Steuerung der Verschliessmaschine 2 ist, die alle Antriebe der Verschliessvorrichtung, der Fangvorrichtung und der Übergabevorrichtung inklusive Stabwechseleinrichtung und der Stabmagazineinrichtung synchronisiert steuert, wenigstens aber die Antriebe der Fangvorrichtung und der Übergabevorrichtung. Es können auch einzelne Steuerungen bei den Vorrichtungen vorhanden sein, die miteinander synchronisiert sind.

## Patentansprüche

1. Stabmagazineinrichtung (70) an einer Übergabevorrichtung (1), in welcher Vorrichtung ein Stab (4) von Aufnahmemitteln (5,7) in einer Beladestellung gehalten mit am Stab hängenden Verpackungseinheiten (100) beladbar ist, und welche eine Stabwechseleinrichtung (60) umfasst, mittels welcher ein beladener Stab durch einen leeren, zu beladenden Stab auswechselbar ist, **dadurch gekennzeichnet, dass** die Stabmagazineinrichtung (70) ein angetriebenes Magazin (71) umfasst, welches eine Vielzahl von einzelnen, voneinander abgegrenzten Stabaufnahmen (72, 72', 72") für jedes der beiden Enden eines Stabes (4) bildet, die zusammen angetrieben entlang eines Förderweges (F) von einer Beschickungsseite (73) des Magazins zu einer Abgabeseite (74) bewegbar sind, an welcher jeweils die Stabaufnahmen zur Abgabe eines Stabes an die Stabwechseleinrichtung (60) positionierbar sind.

2. Stabmagazineinrichtung (70) nach Anspruch 1, **dadurch gekennzeichnet, dass** die Stabaufnahmen für jedes Stabende jeweils von an einer angetriebenen Förderkette (75) oder an einem angetriebenen Förderriemen angeordneten Förderelementen (76) und jeweils einer stillstehenden unteren Führung (76') und jeweils einer stillstehenden seitlichen Führung (76") ausgebildet sind.

3. Stabmagazineinrichtung (70) nach Anspruch 1 oder 2, **dadurch gekennzeichnet, dass** die Stabaufnahmen entlang eines im Wesentlichen vertikalen Abschnittes des Förderweges jeweils von einer stillstehenden oberseitigen Führung (77) begrenzt werden.

4. Stabmagazineinrichtung (70) nach einem der Ansprüche 1 bis 3, **dadurch gekennzeichnet, dass** deren Antrieb (80) für das Magazin mit der Steuerung (50) der Übergabevorrichtung (1) gekoppelt ist.

5. Stabmagazineinrichtung nach Anspruch 4, **dadurch gekennzeichnet, dass** eine Erkennungseinrichtung (81) für leere Stabaufnahmen vorgesehen ist, und dass durch die Steuerung das Magazin zur Weiterförderung leerer Stabaufnahmen antreibbar ist, bis eine Stabaufnahme mit darin aufgenommenem Stab zur Abgabe des Stabes an die Stabwechseleinrichtung (60) positioniert ist.

6. Übergabevorrichtung (1) mit einer Stabwechseleinrichtung nach einem der Ansprüche 1 bis 5.

7. Übergabevorrichtung (1) nach Anspruch 6, **dadurch gekennzeichnet, dass** die Stabwechseleinrichtung (60) einen Stabwechselschlitten (61) aufweist, durch den mit einer Schlittenbewegung aus einer Ausgangsstellung in die eine Schlittenrichtung sowohl ein beladener Stab (4) aus den Aufnahmemitteln (5,7) wegführbar als auch ein zweiter Stab (4') aus dem Magazin in die Aufnahmemittel einführbar ist.

8. Übergabevorrichtung nach Anspruch 6 oder 7, **dadurch gekennzeichnet, dass** diese ein Fördermittel (52) zur Aufnahme einer Mehrzahl beladener Stäbe aufweist, welches von dem Schlitten jeweils mit einem beladenen Stab bedienbar ist.

9. Übergabevorrichtung (1) nach Anspruch 8, **dadurch gekennzeichnet, dass** das Fördermittel (52) für die beladenen Stäbe ein beidseits an diesen wirkender Kettenförderer (53) oder ein Zahnriemenförderer mit Umlenkrollen (53') ist, bei welchen die Ketten oder die Riemen von einer im Wesentlichen vertikalen Richtung in eine im Wesentlichen horizontale Richtung übergehen, wobei ein vom Stabwechselschlitten weggeführter Stab vom Fördermittel übernehmbar und horizontal in Richtung einer Ausgabestelle weiter förderbar ist.

10. Übergabevorrichtung nach Anspruch 8 oder 9, **dadurch gekennzeichnet, dass** die Beschickungsseite (73) der Stabmagazineinrichtung (70) und die Ausgabestelle (85) des Fördermittels (52) auf derselben Seite der Übergabevorrichtung (1) liegen.

11. Übergabevorrichtung (1) nach einem der Ansprüche 6 bis 10, welche zur Übergabe von an einem ersten stabförmigen Element (30) mittels Halteschlaufen (90-96) hängend angeordneten Verpackungseinheiten an ein zweites stabförmiges Element (4) ausgestaltet ist, wobei Erfassungsmittel (10-22), durch welche die Halteschlaufen erfassbar und über das zweite stabförmige Element förderbar sind sowie Auslösemittel (27,28) vorgesehen sind, durch welche steuerbar bei wählbaren Positionen entlang des Förderweges auf die Erfassungsmittel einwirkbar ist, um das jeweilige Erfassungsmittel zum Loslassen der Halteschlaufe zu bewegen.

12. Anordnung umfassend ein erstes stabförmiges Element (30), welches ein Schwert einer Fangvorrichtung (3) ist, die mit Halteschlaufen versehene Verpackungseinheiten am Ausgang einer Verschliessvorrichtung (2) fängt und an den Halteschlaufen hängend entlang des Schwertes transportiert, und eine Übergabevorrichtung (1) nach einem der Ansprüche 6 bis 11, welche die Verpackungseinheiten im Endbereich des Schwertes greift.

## Claims

1. Rod magazine installation (70) at a transfer device (1) inside of which device a rod (4) is held by receiving means (5, 7) in a loading position and is loadable with package units (100) hanging at the rod, and which comprises a rod changing installation (60) by means of which a loaded rod is exchangeable with an empty rod to be loaded, **characterized in that** the rod magazine installation (70) comprises an actuated magazine (71) forming a plurality of single, mutually spaced rod receivers (72, 72', 72") for each one of both ends of a rod, which are movable in a jointly driven way along a conveying path (F) from a charging side (73) of the magazine to a discharging side (74) where the rod receivers are positioned at the rod changing installation (60) for the delivery of a rod.

2. Rod magazine installation (70) according to claim 1, **characterized in that**, for each rod end, the rod receivers are each formed by conveying elements (76) arranged at an actuated conveyor chain (75) or at an actuated conveyor belt and by a stationary lower guide (76') and by a stationary lateral guide (76").

3. Rod magazine installation (70) according to claim 1 or 2, **characterized in that** the rod receivers are each limited along a substantially vertical section of the conveying path by a corresponding stationary upper guide (77).

4. Rod magazine installation (70) according to one of the claims 1 to 3, **characterized in that** its actuator (80) for the magazine is coupled with the controller (50) of the transfer device (1).

5. Rod magazine installation according to claim 4, **characterized in that** a detection installation (81) for empty rod receivers is provided, and **in that** the magazine is actuable by the controller for further transportation of empty rod receivers, until a rod receiver with a rod hosted inside is positioned for the delivery of the rod to the rod changing installation (60).

6. Transfer device (1) with a rod changing installation according to one of the claims 1 to 5.

7. Transfer device (1) according to claim 6, **characterized in that** the rod changing device (60) has a rod changing slide (61) by means of which, with a slide movement from an initial position in the slide direction, a loaded rod (4) can be led away from the receiving means (5, 7) as well as a second rod (4') can be inserted from the magazine into the receiving means.

8. Transfer device according to claim 6 or 7, **characterized in that** it has a conveying means (52) for receiving a plurality of loaded rods, which can be supplied with an individual loaded rod from the slide.

9. Transfer device (1) according to claim 8, **characterized in that**, for the loaded rods, the conveying means (52) is a chain conveyor (53) acting on both of their sides or a toothed belt conveyor with deflection rollers (53') for which the chains or the belts pass from a substantially vertical direction into a substantially horizontal direction, wherein a rod led away from the rod changing slide can be taken over by the conveying means and transported further in the direction of a discharging position.

10. Transfer device according to claim 8 or 9, **characterized in that** the charging side (73) of the rod magazine installation (70) and the discharging position (85) of the conveying means (52) are located on the same side of the transfer device (1).

11. Transfer device (1) according to one of the claims 6 to 10, being formed to transfer package units arranged such that they hang at a first rod-shaped element (30) by means of support loops (90-96) to a second rod-shaped element (4), wherein capturing means (10-22) by means of which the support loops are capturable and conveyable over the second rod-shaped element, as well as detaching means (27, 28) by means of which it may be acted upon the capturing means in a controllable way and in selectable positions along the conveying path, are provided in order to make the individual capturing means release the support loop.

12. Arrangement comprising a first rod-shaped element (30) being a blade of a catching device (3) catching package units provided with support loops at the exit of a sealing device (2) and transporting them hanging at the support loops along the blade, and a transfer device (1) according to one of the claims 6 to 11 which grabs the package units in the end area of the blade.

## Revendications

1. Chargeur de bâtons (70) à un dispositif de transfert (1) dans lequel dispositif un bâton (4) qui est retenu dans une position de chargement par des moyens de réception (5, 7) est chargeable avec des unités d'emballage (100) qui sont suspendues au bâton, et qui comporte une installation de changement de bâtons (60) à l'aide de laquelle un bâton chargé est remplaçable par un bâton vide à charger, **caractérisé en ce que** le chargeur de bâtons (70) comporte un chargeur entraîné (71) qui forme, pour chacun des deux extrémités d'un bâton (4), une pluralité de récepteurs de bâton (72, 72', 72") individuels et délimités l'un par rapport à l'autre, qui peuvent être mûs, entraînés ensemble, le long d'un chemin de convoyage (F) à partir d'un côté de chargement (73) du chargeur jusqu'à un côté de distribution (74) ou les récepteurs de bâton peuvent être positionnés pour distribuer un bâton à l'installation de changement de bâtons (60).

2. Chargeur de bâtons (70) selon la revendication 1, **caractérisé en ce que**, pour chaque extrémité de bâton, les récepteurs de bâton sont chacun formés par des éléments de convoyage (76) arrangés à un convoyeur à chaînes entraîné (75) ou à un convoyeur à bande entraîné et par un guidage inférieur et stationnaire (76') et par un guidage latéral et stationnaire (76").

3. Chargeur de bâtons (70) selon l'une des revendications 1 ou 2, **caractérisé en ce que** les récepteurs de bâton sont chacun limités par un guidage supérieur et stationnaire (77) le long d'une section essentiellement verticale du chemin de convoyage.

4. Chargeur de bâtons (70) selon l'une des revendications 1 à 3, **caractérisé en ce que** son entraînement (80) pour le chargeur est couplé avec la commande (50) de l'installation de transfert (1).

5. Chargeur de bâtons selon la revendication 4, **caractérisé en ce qu'**une installation de détection (81) pour des récepteurs de bâton vides est prévue, et **en ce que** le chargeur peut être entraîné par la commande pour la réexpédition de récepteurs de bâton vides, jusqu'à un récepteur de bâton avec un bâton logé dedans est positionné pour la distribution du bâton à l'installation de changement de bâtons (60).

6. Dispositif de transfert (1) avec une installation de changement de bâtons selon l'une des revendications 1 à 5.

7. Dispositif de transfert (1) selon la revendication 6, **caractérisé en ce que** l'installation de changement de bâtons (60) comporte un chariot pour changer des bâtons (61) à l'aide duquel, en mouvant le chariot d'une position initiale dans la direction du chariot, non seulement un bâton chargé (4) peut être emporté des moyens de réception (5, 7) mais encore un deuxième bâton (4') peut être inséré du chargeur dans les moyens de réception.

8. Dispositif de transfert selon l'une des revendications 6 ou 7, **caractérisé en ce qu'**il comporte un moyen de convoyage (52) pour la réception d'une pluralité de bâtons chargés, qui peut fournir à chaque fois un bâton chargé du chariot.

9. Dispositif de transfert (1) selon la revendication 8, **caractérisé en ce que**, pour les bâtons chargés, le moyen de convoyage (52) est un convoyeur à chaînes (53) qui opère des deux côtés des bâtons chargés ou un convoyeur à courroie crantée avec des poulies de déviation (53'), pour lequel les chaînes ou les bandes passent d'une direction essentiellement verticale dans une direction essentiellement horizontale, un bâton emporté du chariot pour changer des bâtons pouvant être pris en charge par le moyen de convoyage et pouvant être convoyé horizontalement dans la direction d'une position de distribution.

10. Dispositif de transfert selon l'une des revendications 8 ou 9, **caractérisé en ce que** le côté de chargement (73) du chargeur de bâtons (70) et la position de distribution (85) du moyen de convoyage (52) sont situés du même côté du dispositif de transfert (1).

11. Dispositif de transfert (1) selon l'une des revendications 6 à 10, étant formé pour transférer des unités d'emballage, arrangées de sorte qu'elles soient suspendues à un premier élément (30) en forme de bâton à l'aide des sangles (90-96), à un deuxième élément (4) en forme de bâton, des moyens de captage (10-22) à l'aide desquels les sangles sont captables et transportables par-dessus le deuxième élément en forme de bâton, et également des moyens de déclenchement (27, 28), à l'aide desquels il est possible d'opérer les moyens de captage, de façon contrôlable et dans des positions qui peuvent être choisies, le long du chemin de transport, étant prévus pour faire le moyen de captage respectif lâcher la sangle.

12. Arrangement comportant un premier élément en forme de bâton (30) qui est une lame d'un dispositif d'attrape (3), qui attrape des unités d'emballage avec des sangles à la sortie d'un dispositif de fermeture (2) et qui les transporte, suspendues aux sangles, le long de la lame, et un dispositif de transfert (1) selon l'une des revendications 6 à 11 qui prend les unités d'emballage dans la section finale de la lame.
